Europäisches Patentamt

European Patent Office

Office européen des brevets

(11) Veröffentlichungsnummer: **0 440 114 A2**

# (12) EUROPÄISCHE PATENTANMELDUNG

(21) Anmeldenummer: **91101005.6**

(22) Anmeldetag: **26.01.91**

(51) Int. Cl.5: **A01B 59/048**, E01H 5/00

(30) Priorität: **01.02.90 DE 4002629**

(43) Veröffentlichungstag der Anmeldung:
**07.08.91 Patentblatt 91/32**

(84) Benannte Vertragsstaaten:
**AT BE CH DE DK FR GB IT LI LU NL**

(71) Anmelder: **Maschinen-Mohr Inh.: Hermann Mohr**
**Höttinger Strasse**
**W-8836 Ellingen(DE)**

(72) Erfinder: **Mohr, Hermann**
**Höttinger Strasse 4**
**W-8836 Ellingen(DE)**

(74) Vertreter: **Patentanwälte Czowalla . Matschkur + Partner**
**Dr.-Kurt-Schumacher-Strasse 23 Postfach 9109**
**W-8500 Nürnberg 11(DE)**

(54) **Vorrichtung zum Anbau von Strassenreinigungs- oder Landschaftspflege-Gerät an ein Fahrzeug.**

(57) Vorrichtung zum Anbau von Straßenreinigungs- oder Landschaftspflege-Gerät an ein Fahrzeug, mit einem Kuppelbock, der durch einen oder mehrere Stellzylinder gegenüber dem Fahrzeug bewegbar befestigt ist und mit einer oder mehreren Linearführungen in Eingriff steht, die am Fahrzeug fixiert sind, wobei der oder die Stellzylinder sowohl am Fahrzeug als auch am Kuppelbock gelenkig abgestützt und in Angriff gebracht sind.

FIG. 1

# VORRICHTUNG ZUM ANBAU VON STRASSENREINIGUNGS- ODER LANDSCHAFTSPFLEGE-GERÄT AN EIN FAHRZEUG

Die Erfindung betrifft eine Vorrichtung zum Anbau von straßenreinigungs- oder Landschaftspflege-Gerät an ein Fahrzeug, mit einem daran befestigten Kuppelbock, der mittels ein oder mehrerer Stellzylinder gegenüber dem Fahrzeug bewegbar ist und mit einer oder mehreren Linearführungen in Eingriff steht, die am Fahrzeug fixiert sind.

Bekannt ist ein Anbaubock für die Dreipunkt-Hebevorrichtung eines Schleppers (DE-OS 33 15 813). Der Anbaubock, an dem mittels Ankupplungs- und Gestellteile eine Landmaschine anbringbar ist, weist eine untere und eine obere Linear-führung auf. Auf dem Ende der oberen Linearführung ist ein Hydraulikzylinder angeordnet, um die Landmaschine längs der Linearführungen entlang zu bewegen. Der Hydraulikzylinder ist allerdings auf der Linearführung unbeweglich aufgesetzt, so daß seine Befestigung im praktischen Betrieb außerordentlich starken mechanischen Belastungen, insbesondere beim Anstoßen an externe Hindernisse, ausgesetzt sein kann.

Nach alledem besteht ein beachtliches Bedürfnis nach einer Vorrichtung zum Anbau von Gerät an Fahrzeugen, die am Fahrzeug platzsparend unter Vermeidung einer sperrigen Bauform und Erzielung einer gewissen mechanischen Flexibilität anbringbar ist. Zur Lösung all der genannten Probleme wird bei einer Vorrichtung mit den eingangs genannten Merkmalen nach einer ersten Alternative der Erfindung vorgeschlagen, daß der oder die Stellzylinder sowohl am Fahrzeug als auch am Kuppelbock gelenkig abgestützt und in Angriff gebracht sind.

Die Verschiebung längs der Linearführung wird durch ein oder mehrere Stellzylinder oder sonstige Stellorgane besorgt. In zweckmäßiger Realisierung des Erfindungsgedankens wird die Linearführung senkrecht zur Fahrzeug-Aufstandsfläche bzw. -Bodenfläche verlaufend angeordnet. Damit kann eine Linearführung unmittelbar in vertikaler Richtung verwirklicht werden.

Im Betrieb von angebautem Gerät tritt häufig die Schwierigkeit auf, daß Landschafts- oder Straßenunebenheiten Stöße oder sonstige mechanische Kräfte auf den Kuppelbock auslösen, was Verschleiß und Reparaturanfälligkeit für die Anbauvorrichtung erhöht. In dieser Hinsicht wird nach einer zweiten Lösungsalternative der Erfindung vorgeschlagen, daß der Kuppelbock mit zur Längsrichtung der Linearführung quer verlaufendem Spiel in Eingriff steht. Mit anderen Worten, die Kopplung mit der Linearführung ist dergestalt, daß der Kuppelbock bei den genannten Einwirkungen in begrenztem Umfang auch Ausgleichsbewegungen durchführen kann, die von der eigentlichen Führungsrichtung der Linearführung abweichen. So sind dem Kuppelbock beispielsweise, wenn er im Betrieb über sein etwaiges Räder- oder Fahrgestell auf Unebenheiten trifft, ausgleichende Wankbewegungen um eine (horizontale) Achse senkrecht zur Richtung der Linearführung möglich. Durch diese pendelartige Geräteaufhängung wird allgemein die Anpassungsfähigkeit der gesamten Nutzfahrzeuganordnung mit Arbeitsgerät erhöht.

Eine konkrete Realisierung der erfindungsgemäßen Linearführung besteht in der Ausbildung als Hohlschiene, in der ein oder mehrere Gleitkörper, Führungsrollen oder -räder längs bewegbar gelagert sind, die zum Kuppelbock gehören. Mit der Hohlschiene wird gleichsam ein Führungsrahmen oder -gehäuse geschaffen, mit welchem die Kopplung des Kuppelbocks sicher, mechanisch stabil und konstruktiv einfach ausführbar ist. Mit der Hohlschiene ist auch der vorgenannte Gedanke - für Linearführung quer verlaufendes Spiel für den Kuppelbock - besonders zweckmäßig realisierbar: die Führungsrollen werden auf einer gemeinsamen Achse drehgelagert angebracht, die mit dem Kuppelbock fest verbunden ist; die Achse verläuft quer zur Führungsrichtung der Hohlschiene, und ihre Länge unterschreitet die Breite der Hohlschiene, so daß zu deren Seitenwand ausreichend Abstand bzw. Spiel für ausgleichende Wankbewegungen oder Querverschiebungen besteht. Die Führungsrollen können im Rahmen einer zweckmäßigen Weiterbildung der Erfindung zur Erzielung einer leichten Verstellbarkeit kugelgelagert oder insbesondere mittels Kugellager ausgeführt sein.

Der (weiteren) Verkürzung der von Fahrzeug und daran angebrachter Anbauvorrichtung benötigten Gesamtlänge dient eine besondere Ausbildung der Erfindung wie folgt: Die Linearführung wird an der Front- und/oder Heckwandung des Fahrzeugs fixiert, und der Kuppelbock wird darin eingerückt; zudem werden die Stellzylinder gegen je eine Fahrzeug-Seitenwandung über eine Gelenkstelle abgestützt und in Angriff an den entlang der Front- bzw. Heckwandung verfahrbaren Kuppelbock in Angriff gebracht. Eine Anordnung der Stellzylinder zwischen Fahrzeug und zu bewegendem Kuppelbock, was die Länge der Gesamtanordnung erhöhen würde, ist mithin vermieden. Gleichzeitig steht den Stellzylindern aufgrund ihrer Anordnung an den Fahrzeugseitenwandungen ausreichend Hub- und Schwenkbewegungsraum zur Verfügung, den sie zur Herbeiführung ihrer für das Einwirken auf den Kuppelbock notwendigen Winkellage sowie eines ausreichenden Verstellhubs für den Kuppelbock selbst benötigen.

In Weiterführung dieses Gedankens sind dem Kuppelbock einerseits und den an diesem angreifenden Stellzylindern andererseits jeweils eine Hebelstange oder ein ganzes Hebelgestänge zwischengeschaltet; letztere sind an den Seitenwandungen hebelartig verschwenkbar angelenkt und sowohl mit dem Stellzylinder als auch - vorzugsweise an ihren Enden - mit dem Kuppelbock über Gelenkstellen verbunden. Die Hebelstange oder das Hebelgestänge dient der Kraftübertragung von den Stellzylindern auf dem Kuppelbock. Der damit erzielte Vorteil besteht darin, daß die Stellzylinder an dem am jeweiligen Fahrzeug günstigsten Ort - mit größtmöglichem Hub- und Bewegungsspielraum - angeordnet werden können und dennoch ihre Kraftausübung auf den Kuppelbock zu dessen Verschiebung gegeben ist. Gleichzeitig können je nach unterschiedlichen Einsatzbedingungen entsprechend angepaßte (Hubzylinder-)Kraft-Weg/Hebelarm-Übersetzungen realisiert werden.

Weitere Einzelheiten, Merkmale und Vorteile der Erfindung ergeben sich aus der nachfolgenden Beschreibung eines bevorzugten Ausführungsbeispiels der Erfindung sowie anhand der Zeichnung. Darin zeigen:

Fig. 1 eine Seitenansicht auf ein Fahrzeug mit erfindungsgemäßer Anbauvorrichtung,

Fig. 2 einen Teil einer entsprechenden Seitenansicht mit gegenüber Fig. 1 verstelltem Anbaugerät,

Fig. 3 eine teilweise geschnittene Draufsicht gemäß Linie III - III in Fig. 2,

Fig. 4 eine Stirnansicht etwa gemäß der Linie IV - IV in Fig. 1, und

Fig. 5 eine entsprechende Stirnansicht mit gegenüber Fig. 4 verstelltem Kuppelbock.

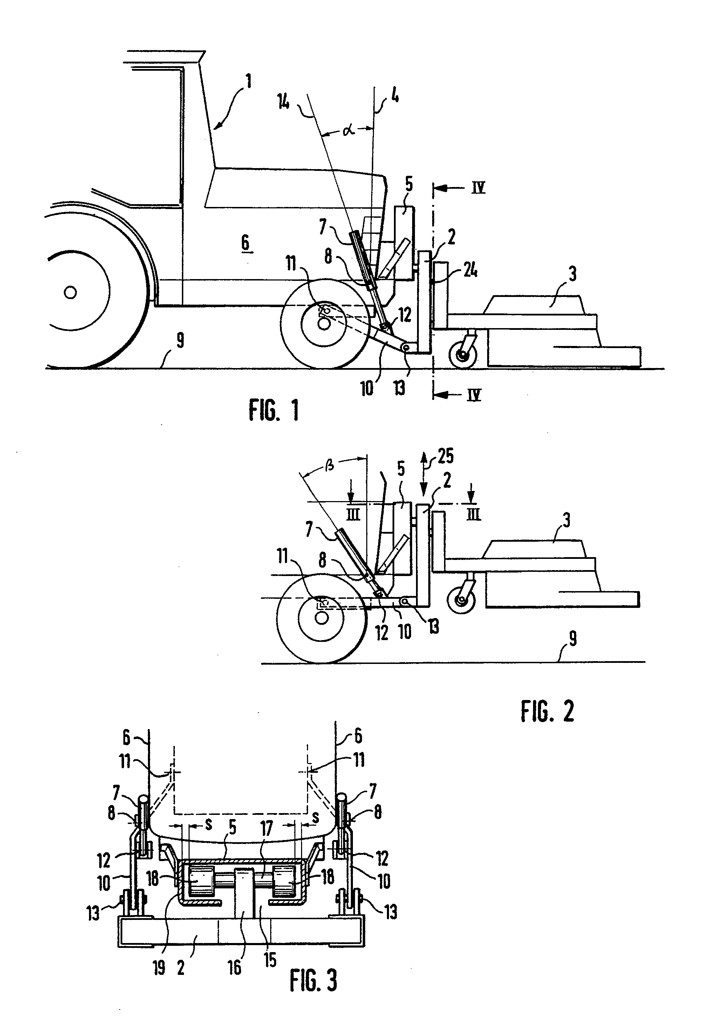

Gemäß Fig. 1 weist die an der Frontseite eines Schleppers 1 angebrachte Anbauvorrichtung als wesentliche Teile einen Schnellkuppelbock 2, an dem ein Arbeitsaggregat 3 zur Straßenreinigung oder Landschaftspflege eingehängt ist, eine parallel zur Vertikalen 4 bzw. Frontseite des Fahrzeugs 1 verlaufende Linearführung 5 und beidseitig, d.h. an je einer Seitenwandung 6 des Fahrzeugs 1 angeordnete Stellzylinder 7 auf. Diese sind jeweils über Gelenkstellen 8 befestigt, welche eine Schwenkachse parallel zur Bodenaufstandsfläche 9 sowie senkrecht zur Zeichenebene verlaufend realisieren. Die Stellzylinder 7 bewegen den Schnellkuppelbock längs seiner Linearführung 5 mittelbar, indem sie jeweils über eine Hebelstange 10 auf diesen einwirken. Die Hebelstangen 10 sind ebenfalls an der Fahrzeugseitenwandung 6 mittels zweite Gelenkstellen 11 um eine Achse parallel zur Schwenkachse der Stellzylinder 7 verschwenkbar gelagert. Die Stellzylinder 7 greifen an je eine Hebelstange 10 über dritte Gelenkstellen 12 an. Die Hebelstangen 10 sind mit dem Schnellkuppelbock 2 an ihrem vom Fahrzeug 1 abgewandten Ende über vierte Gelenkstellen 13 verbunden.

Aus einem Vergleich der Fig. 1 mit Fig. 2 wird die Wirkungsweise dieser gelenkigen Hebelanordnung in Verbindung mit den Stellzylindern 7 deutlich: Gemäß Fig. 1 befindet sich das Arbeitsaggregat 3 in seiner der Bodenaufstandsfläche 9 nächst gelegenen Stellung, was durch Ausfahren der Stellzylinder 7 bewirkt ist. Diese haben dabei die Hebelstangen 10 zum Boden 9 hin verschwenkt, und mithin wurde der Schnellkuppelbock 2 nebst Arbeitsaggregat 3 entlang der Linearführung 5 in seiner Längsrichtung 25 nach unten verschoben. In dieser Stellung schließt die Längsachse 14 des Stellzylinders 7 mit der Vertikalen 4 den (kleineren) Arbeitswinkel $\alpha$ ein. Nach Fig. 2 ist das Arbeitsaggregat 3 in seine vom Boden 9 entfernte Ruhestellung hochgehoben, indem die Hebelstangen 10 mittels der ihnen zugeordneten Stellzylinder 7 nach oben verschwenkt sind. Mit dieser Verschwenkung gekoppelt sind die Winkelstellungen der Stellzylinder 7, was durch ihre Ruhewinkel $\beta$ zur Vertikalen 4 gekennzeichnet ist; dieser Ruhewinkel $\beta$ ist größer als der Arbeitswinkel $\alpha$. Indem die Stellzylinder 7 an den Fahrzeug-Seitenwänden 6 angelenkt, und die entsprechenden Gelenkstellen 8 von den Zylinderenden entfernt zur Zylindermitte hin verlagert angeordnet sind, wird für die Stellzylinder 7 ein außerordentlicher Bewegungsspielraum sowohl hinsichtlich ihrer linearen Aus- und Einfahrbewegungen als auch ihrer Schwenkbewegungen um die Gelenkstellen 8 geschaffen.

Diesem Bewegungsspielraum entspricht eine hohe Verstellbarkeit des Schnellkuppelbocks 2 längs der Linearführung 5. Die Kraft/Hebelweg-Verhältnisse können im Rahmen der Erfindung beispielsweise durch Versetzen der dritten Gelenkstellen 12 zwischen Stellzylinder 7 und Hebelstange 10 zu den zweiten Gelenkstellen 11 zwischen Hebelstange 10 und Fahrzeug 1 hin an spezielle Einsatzbedingungen optimal angepaßt werden.

Nach der Draufsicht gemäß Fig. 3 ist die Linearführung 5 als im Querschnitt quaderförmige Hohlschiene ausgebildet, die an ihrer vom Fahrzeug 1 abgewandten Breitseite einen Durchtrittsspalt 15 besitzt. Vom Schnellkuppelbock 2 aus erstreckt sich durch diesen ein daran fest angebrachter Vorsprung 16, der in Querrichtung zur Linearührung 5 von einer Achse 17 durchsetzt ist. Auf den Enden dieser Achse 17 sitzen drehbar gelagert Führungsrollen 18, die von der Linearführung bzw. der Hohlschiene 5 gehäuseartig umgeben sind. Da die Länge der Achse 17 die Breite der Hohlschiene 5 unterschreitet, verbleibt zwischen den Schmalseiten 19 der Hohlschiene 5 und den entsprechenden gegenüberliegenden Führungsrollen 18 jeweils ein Bewegungsspiel s.

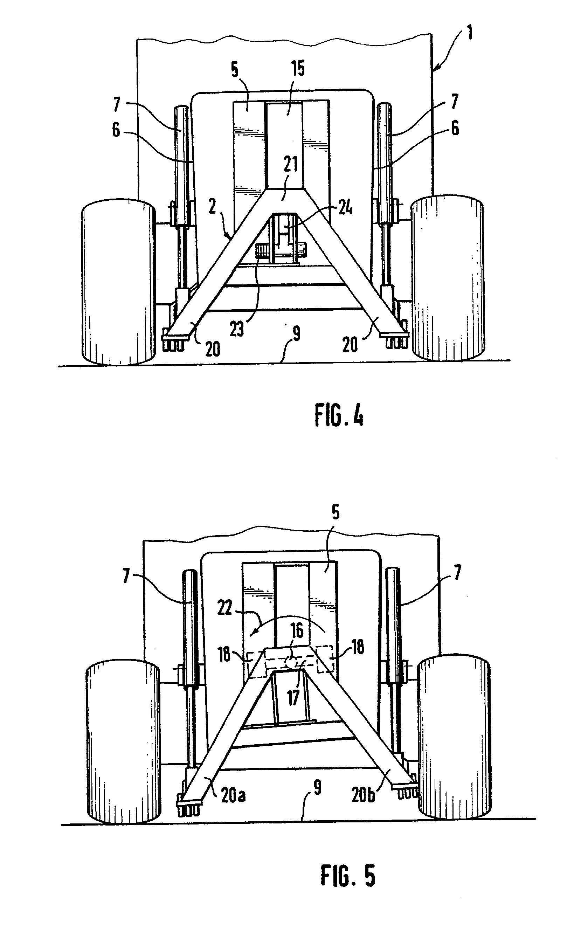

Die Funktion dieses Bewegungsspiels s ist anhand eines Vergleichs der Fig. 4 mit Fig. 5 erkennbar: Gemäß Zeichnung ist der Schnellkuppelbock 2 im wesentlichen aus zwei nach oben V-förmig zusammenlaufenden gleichlangen Schenkeln 20 gebildet und besitzt im Scheitelbereich 21 dieser V-Form den Vorsprung 16 mit Achse 17 und Führungsrollen 18, die in die Hohlschiene bzw. Linearführung 5 eingerückt sind (vgl. Fig. 3 sowie gestrichelte Darstellung in Fig. 5). Gemäß Fig. 4 befindet sich der Schnellkuppelbock in seiner Normalstellung, d.h. seine beiden Schenkel 20 sind vom Boden 9 etwa gleich weit entfernt. Aufgrund von Bodenunebenheiten, die über das Arbeitsaggregat 3 (vgl. Fig. 1) in unsymmetrische Krafteinwirkungen auf den Schnellkuppelbock 2 resultieren können, kann es gemäß Fig. 5 beispielsweise zu einer zusätzlichen Anhebung eines Schenkels 20b gegenüber dem anderen Schenkel 20a kommen, und dem Schnellkuppelbock 2 wird ein Pendel- oder Wankmoment 22 eingeprägt. Aufgrund des oben beschriebenen Bewegungsspiels s in der Linearführung 5 kann dieses Wankmoment 22 durch eine entsprechende Ausgleichs-bzw. Wankbewegung um eine horizontale Achse senkrecht zur Zeichenebene kompensiert werden, wie in Fig. 5 anhand der unterschiedlichen Abstände der Enden des ersten Schenkels 20a und des zweiten Schenkels 20b vom Boden 9 ersichtlich. Das Ausmaß der Ausgleichsbewegungen bemißt sich nach dem Bewegungsspiel s und ist beispielsweise dadurch begrenzt, daß die Führungsrollen 18 mit ihren Ecken an der Wandung der Schmalseiten 19 der Linearführung bzw. Hohlschiene 5 anstoßen.

Schließlich ist aus Fig. 4 noch eine gegen die Kraft einer Feder 23 verschwenkbare Einhängvorrichtung 24, beispielsweise ein Haken, ersichtlich.

**Patentansprüche**

1. Vorrichtung zum Anbau von Straßenreinigungs- oder Landschaftspflege-Gerät (3) an ein Fahrzeug (1), mit einem Kuppelbock (2), der durch einen oder mehrere Stellzylinder (7) gegenüber dem Fahrzeug (1) bewegbar befestigt ist und mit einer oder mehreren Linearführungen (5) in Eingriff steht, die am Fahrzeug (1) fixiert sind, dadurch gekennzeichnet, daß der oder die Stellzylinder (7) sowohl am Fahrzeug (1) als auch am Kuppelbock (2) gelenkig abgestützt und in Angriff gebracht sind.

2. Vorrichtung zum Anbau von Straßenreinigungs- oder Landschaftspflege-Gerät (3) an ein Fahrzeug (1), mit einem Kuppelbock (2), der durch einen oder mehrere Stellzylinder (7) gegenüber dem Fahrzeug (1) bewegbar befestigt ist und mit einer oder mehreren Linearführungen (5) in Eingriff steht, die am Fahrzeug (1) fixiert sind, insbesondere nach Anspruch 1, dadurch gekennzeichnet, daß der Kuppelbock (2) mit zur Längsrichtung (25) der Linearführung (5) quer verlaufendem Spiel (s) in Eingriff steht.

3. Vorrichtung nach Anspruch 1 oder 2, dadurch gekennzeichnet, daß die Linearführung (5) senkrecht zur Fahrzeug-Aufstandsfläche (9) verläuft.

4. Vorrichtung nach Anspruch 1, 2 oder 3, dadurch gekennzeichnet, daß die Linearführung (5) als Hohlschiene (Fig. 3) ausgebildet ist, in der ein oder mehrere Gleitkörper, Führungsrollen (18) oder -räder des Kuppelbocks (2) in Längsrichtung (25) bewegbar gelagert sind.

5. Vorrichtung nach Anspruch 4, dadurch gekennzeichnet, daß die Führungsrollen (18) auf einer gemeinsamen, mit dem Kuppelbock (2) starr verbundenen Achse (17) drehgelagert sind, die in der Hohlschiene (5) quer verläuft und in ihrer Länge die Hohlschienenbreite unterschreitet (s).

6. Vorrichtung nach Anspruch 4 oder 5, gekennzeichnet durch kugelgelagerte und/oder mittels Kugellager realisierte Führungsrollen (18).

7. Vorrichtung nach einem der vorhergehenden Ansprüche, dadurch gekennzeichnet, daß der Kuppelbock (2) mit zwei in V-Form verbundenen Schenkeln (20a,20b) versehen ist und über ihren gemeinsamen Scheitelbereich (21) in Eingriff mit der Linearführung (5) steht, und die Schenkel (20) vorzugsweise an ihren freien Enden je eine Gelenkstelle (13) für den Angriff der Stellzylinder (7) aufweisen.

8. Vorrichtung nach einem der vorhergehenden Ansprüche, gekennzeichnet durch einen an der Front- und/oder Heckwandung des Fahrzeugs (1) lineargeführten (5) Kuppelbock (2), an dem vorzugsweise an je einer Fahrzeug-Seitenwandung (6) gelenkig (8) abgestützte Stellzylinder (7) angreifen.

9. Vorrichtung nach Anspruch 8, dadurch gekennzeichnet, daß die Stellzylinder (7) am Kuppelbock jeweils mittelbar über eine Stange (10) oder ein Gestänge angreifen, die an den Seitenwandungen (6) hebelartig verschwenkbar angelenkt (11) und mit dem Stellzylinder (7) sowie dem Kuppelbock (2) gelenkig (12,13)

verbunden sind.

FIG. 1

FIG. 2

FIG. 3

FIG. 4

FIG. 5